# EUROPEAN PATENT APPLICATION

(11) **EP 1 795 944 A1**
(43) Date of publication of application: **13.06.2007**
(21) Application number: 06125728.3
(22) Date of filing: 08.12.2006
(51) Int. Cl.: G02B 27/64, G02B 7/02

(54) **Lens device and imager apparatus with image stabilizer**

(30) Priority: 08.12.2005 JP 2005355249
(71) Applicant: SONY CORPORATION, Tokyo (JP)
(72) Inventor: Maeda, Ippei Sony Corporation, Tokyo (JP); Tsutsumi, Takuya Sony Corporation, Tokyo (JP)
(74) Representative: Körber, Martin Hans

(57) **Abstract**

A lens device is provided. The lens device includes: an image stabilizer having a lens holding frame which holds a correcting lens, a first driver which moves the lens holding frame in a first direction perpendicular to an optical axis direction of the correcting lens, and a second driver which moves the lens holding frame in a second direction perpendicular to the optical axis direction and the first direction; and a lens barrel in which the image stabilizer is installed. The optical axis of the correcting lens held by the image stabilizer is displaced from the center of the lens barrel, and the image stabilizer is arranged such that a direction of thrust generated by each of the first and second drivers forms an angle of approximately 45° with a line connecting the optical axis of the correcting lens and the center of the lens barrel.

## Description

### CROSS REFERENCES TO RELATED APPLICATIONS

The present invention contains subject manner related to Japanese Patent Application JP 2005-355249 filed in the Japanese Patent Office on December 8, 2005, the entire contents of which being incorporated herein by reference.

### BACKGROUND OF THE INVENTION

### Field of the Invention:

The present invention relates to a lens device including an image stabilizer which stabilizes image blurred by vibration or the like at the time of shooting, and to an imager apparatus incorporating the lens device.

### Description of the Related Art:

In recent years, performance of an imager apparatus such as a digital still camera and a video camera has been improved remarkably, and it became possible for anyone to easily shoot still pictures and moving pictures with high image quality and with high efficiency. Improved efficiency of such an imager apparatus owes to high performance of an imager apparatus such as a lens, a CCD, and an image processing circuit.

However, even though the lens, the CCD and the like can be made higher in performance, if camera shake or vibration is caused by photographer's hands holding a camera (imager apparatus), blurring occurs in images with high resolution and shot images are blurred. Therefore, some relatively expensive cameras are provided with an image stabilizer capable of stabilizing images blurred by camera shake and the like upon image pickup. However, cameras that require such image stabilizer are not professional-level cameras, and it is to be understood that image stabilizers are indispensable to consumer cameras for a large number of amateur photographers with less shooting experience.

Further, in general, a demand for smaller and lighter cameras (imager apparatuses) is strong and most of photographers like cameras which are light in weight and easy to carry. However, since an image stabilizer in related art is comparatively large in size, when such large image stabilizer is installed in a lens device, the whole of the lens device and camera becomes large in size, which is against a demand for making cameras smaller in size and lighter in weight.

Japanese Patent Application Publication No. 2000-258813 discloses an example of an image stabilizer in related art, for example. In this Patent Reference, there is described one relating to an image stabilizer used for optical equipment and a lens barrel using the image stabilizer. The image stabilizer described in this Patent Reference is an image stabilizer which stabilizes images by moving part of a imaging lens to the inside of a surface perpendicular to an optical axis, including: a lens holding frame, a first guide, a second guide, a first driver, a second driver, and a position detector. The lens holding frame holds a correcting lens. The first guide guides the lens holding frame to move in a first direction within a surface perpendicular to the optical axis. The second guide guides the lens holding frame to move in a second direction perpendicular to the first direction. The first driver and second driver drive the lens holding frame in the first and second directions, respectively. The position detector detects the position of the correcting lens. In this image stabilizer, the first guide and the second driver, or the second guide and the first driver are arranged to partially overlap, when seen from an optical axis direction.

According to the image stabilizer with the structure described in Japanese Patent Application Publication No. 2000-258813, the following effectiveness may be obtained, for example. Specifically, the width and height of the stabilizer can be reduced by arranging a guide shaft for moving a correcting lens, and a coil or magnet for driving the correcting lens such that a pitch moving mechanism and a yaw driver, or a yaw moving mechanism and a pitch driver are arranged to overlap when seen from an optical axis direction (see paragraph [0032]).

Regarding the image stabilizer described in Japanese Patent Application Publication No. 2000-258813, two drivers for moving the correcting lens are provided at two positions on the lens holding frame holding the correcting lens, rotationally shifted from each other approximately by 90° in the circumferential direction. In such image stabilizer, typically, the center of the lens barrel corresponds with the center of the correcting lens, and thrust of each of the two drivers acts in a horizontal direction (yaw direction) and acts in a vertical direction (pitch direction).

However, with such image stabilizer being installed in a cylindrical lens barrel commonly used, the lens barrel may have an unnecessary space on the opposite side to the drivers with the correcting lens in between. Therefore, it is necessary to enlarge the diameter of the lens barrel, which prevents a lens device and an imager apparatus as a whole from being small-sized.

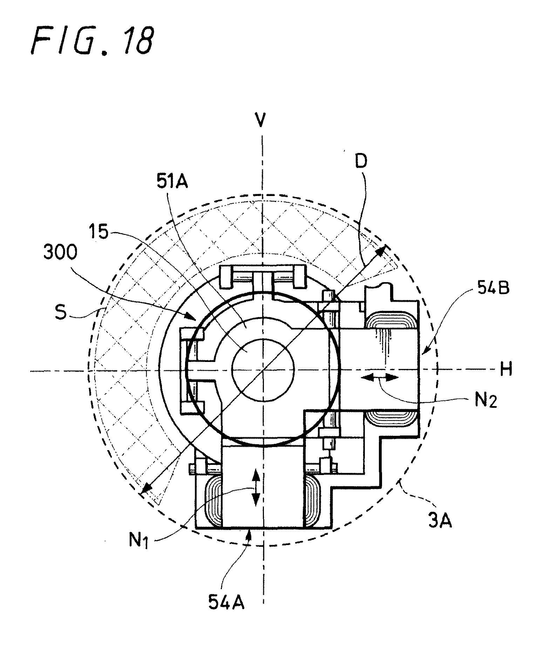

FIG. 18 is a schematic view for explaining the above-mentioned problem, using an image stabilizer 300 according to an embodiment of the present invention. In FIG. 18, regarding two axes intersecting each other at right angles, the horizontal axis represents a horizontal direction H and the vertical axis represents a vertical direction V. Further, the circle shown by a dotted line represents a lens barrel 3A, specifically, the inner circumference of the lens barrel 3A. Regarding the horizontal direction H and vertical direction V, it should be noted that the lateral direction is the horizontal direction H and the longitudinal direction is the vertical direction V, with an image of a subject formed on an image sensor such as a CCD being reference.

The image stabilizer 300 includes: a correcting lens 15; a lens holding frame 51A which holds the correcting lens 15; drivers 54A and 54B which move the correcting lens 15 by means of this lens holding frame 51A; and the like. The drivers 54A and 54B of the image stabilizer 300 are provided at two positions on the lens holding frame 51A, rotationally shifted from each other by 90° in a circumferential direction, and generate thrusts N₁ and N₂ respectively for moving the correcting lens 15.

Such image stabilizer 300 is arranged in the lens barrel 3A such that the center of the correcting lens 15 (optical axis) corresponds with the center of the lens barrel 3A (axial center line), and the thrusts N₁ and N₂ from the drivers 54A and 54B act in the horizontal direction H and vertical direction V, respectively. In this case, since an internal diameter D is required for the lens barrel 3A and there is a large space S on the opposite side to the drivers 54A and 54B with the correcting lens 15 in between, the diameter of the lens barrel 3A may be enlarged.

### SUMMARY OF THE INVENTION

There is a need for obtaining a lens device and an imager apparatus that are small sized as a whole. In the above-described lens device to which a related-art image stabilizer is applied, if the image stabilizer is arranged such that the center of a correcting lens corresponds with the center of a lens barrel and that thrust of respective drivers acts in a horizontal direction and vertical direction, it is necessary to enlarge the diameter of the lens barrel.

A lens device according to an embodiment of the present invention includes: an image stabilizer having a lens holding frame which holds a correcting lens, a first driver which moves the lens holding frame in a first direction perpendicular to an optical axis direction of the correcting lens, and a second driver which moves the lens holding frame in a second direction perpendicular to the optical axis direction and the first direction; and a cylindrical lens barrel in which the image stabilizer is installed. In the lens device, the image stabilizer is arranged such that the optical axis of the correcting lens held by the image stabilizer is displaced from the center of the lens barrel, and a direction of thrust generated by each of the first and second drivers forms an angle of approximately 45° with a line connecting the optical axis of the correcting lens and the center of the lens barrel.

An imager apparatus according to an embodiment of the present invention includes a lens device. The lens device includes: an image stabilizer including a lens holding frame which holds a correcting lens, a first driver which moves the lens holding frame in a first direction perpendicular to an optical axis direction of the correcting lens, and a second driver which moves the lens holding frame in a second direction perpendicular to the optical axis direction and the first direction; and a lens barrel in which the image stabilizer is installed. In the imager apparatus, the image stabilizer is arranged such that the optical axis of the correcting lens held by the image stabilizer is displaced from the center of the lens barrel, and a direction of thrust generated by each of the first and second drivers forms an angle of approximately 45° with a line connecting the optical axis of the correcting lens and the center of the lens barrel.

According to embodiments of a lens device and an imager apparatus of the present invention, an image stabilizer is arranged in a lens barrel efficiently, thereby reducing the diameter of the lens barrel and thus obtaining a lens device and an imager apparatus small-sized as a whole.

### BRIEF DESCRIPTION OF THE DRAWINGS

FIG. 1 is an exploded perspective view showing an image stabilizer of a moving magnet system, which is an image stabilizer according to a first embodiment of the present invention;
FIG. 2 is an external perspective view in which the image stabilizer in FIG. 1 has been assembled;
FIG. 3 is a plan view showing the image stabilizer in FIG. 2;
FIGS. 4A to 4C show the image stabilizer in FIG. 2, in which FIG. 4A is a front view, FIG. 4B is a rear view and FIG. 4C is a left side view;
FIG. 5 is an exploded perspective view showing an image stabilizer of a moving magnet system, which is an image stabilizer according to a second embodiment of the present invention;
FIG. 6 is an external perspective view in which the image stabilizer in FIG. 5 has been assembled;
FIG. 7 is a plan view showing the image stabilizer in FIG. 6;
FIGS. 8A to 8C show the image stabilizer in FIG. 6, in which FIG. 9A is a front view, FIG. 9B is a rear view and FIG. 9C is a left side view;
FIG. 9 is an explanatory diagram for explaining a first example of a lens system of a lens device according to an embodiment of the present invention;
FIG. 10 is a right side view for explaining a lens device according to a first embodiment of the present invention;
FIG. 11 is a plan view for explaining a lens device according to a first embodiment of the present invention;
FIG. 12 is a perspective view of a digital still camera relating to an imager apparatus according to a first embodiment of the present invention, as seen from the front side;
FIG. 13 is a perspective view of a digital still camera relating to an imager apparatus according to a first embodiment of the present invention, as seen from the rear side;
FIG. 14 is a front view of a digital still camera relating to an imager apparatus according to a first embodiment of the present invention;
FIG. 15 is a block diagram for explaining a concept of the control by an image stabilizer according to an embodiment of the present invention;
FIG. 16 is a block diagram showing a first practice example of a schematic configuration of an imager apparatus according to an embodiment of the present invention;
FIG. 17 is a block diagram showing a second practice example of a schematic configuration of an imager apparatus according to an embodiment of the present invention; and
FIG. 18 is a plan view for explaining a technology on which a lens device according to an embodiment of the present invention is based.

### DESCRIPTION OF THE PREFERRED EMBODIMENTS

An optical axis of a correcting lens held by an image stabilizer is displaced from the center of a lens barrel, and the image stabilizer is arranged such that a direction of thrust generated by each of first and second drivers forms an angle of approximately 45° with a line connecting the optical axis of the correcting lens and the center of the lens barrel. Accordingly, such lens device and imager apparatus that the diameter of the lens barrel is reduced to make the lens barrel and the imager apparatus small-sized is obtained with a simplified structure.

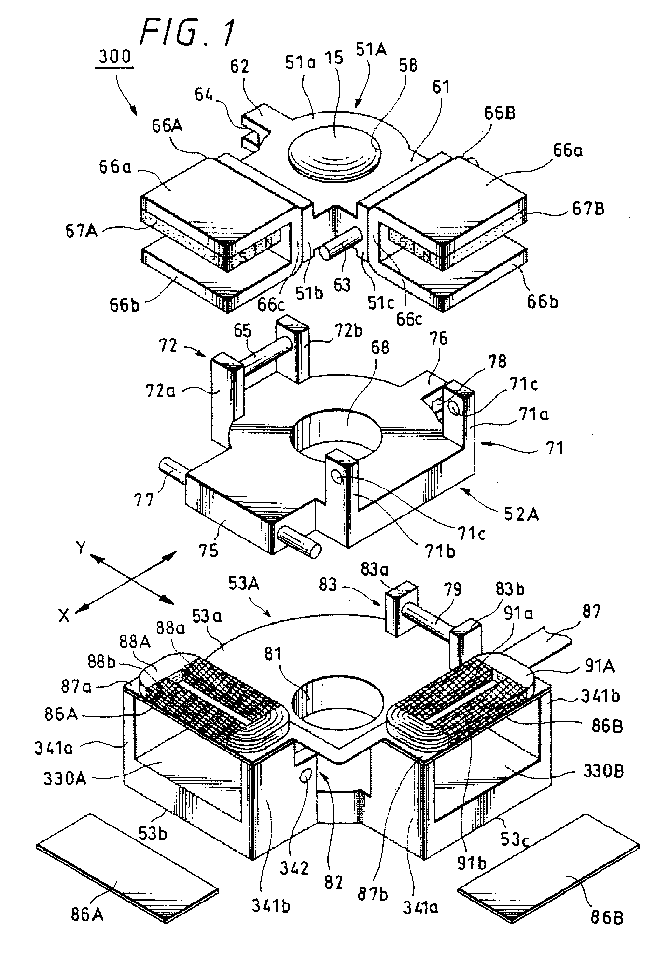

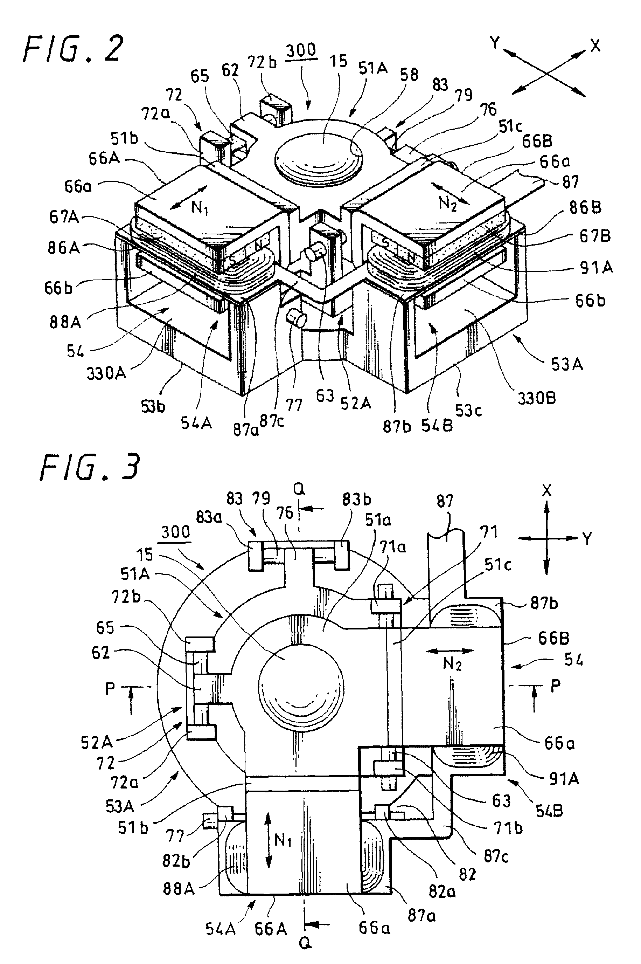

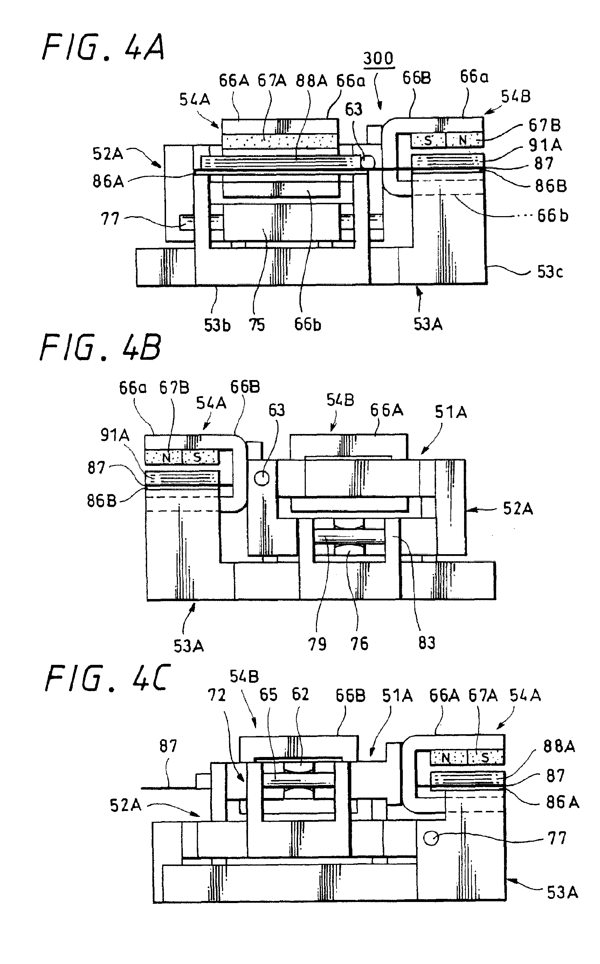

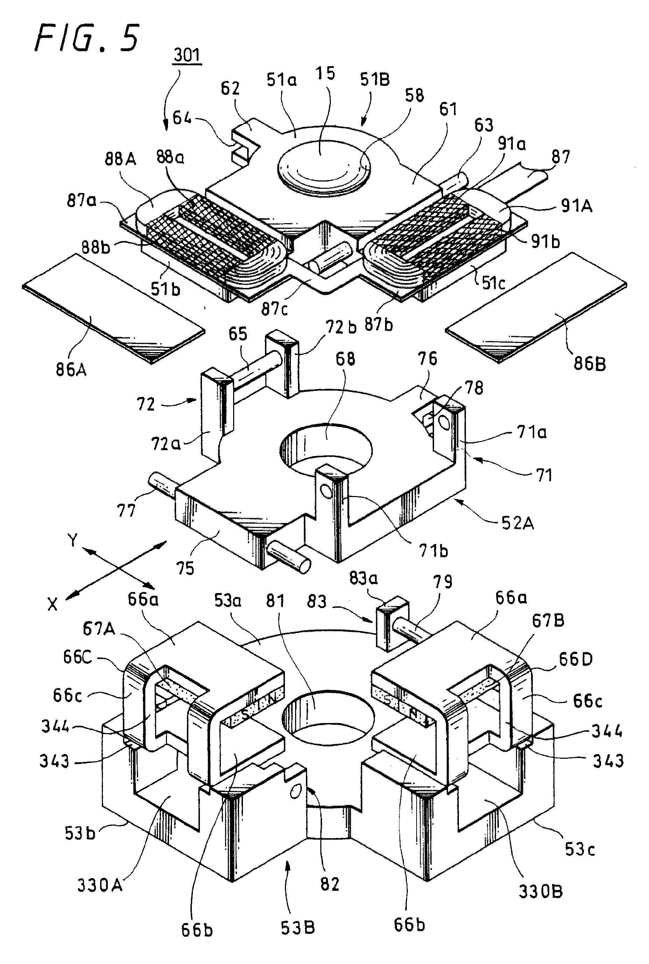

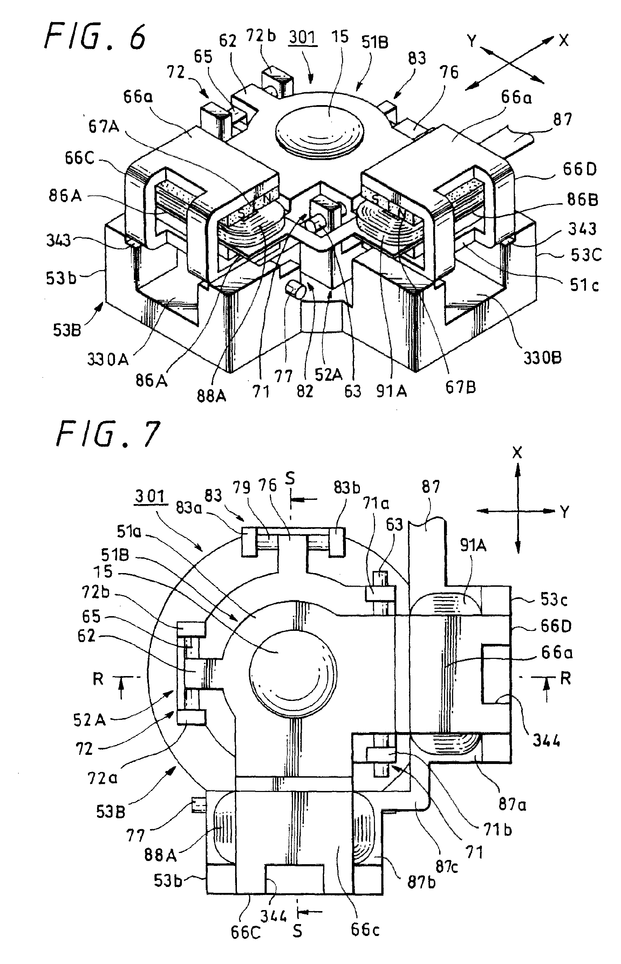

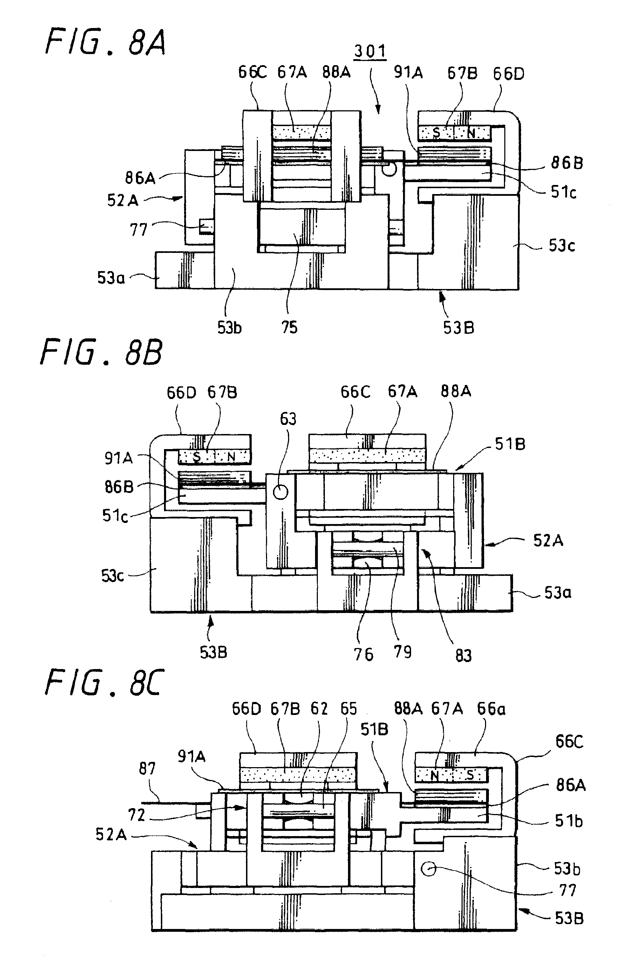

Embodiments of the present invention will be explained referring to the attached drawings. FIGS. 1 to 17 explain embodiments of the present invention. Specifically, FIGS. 1 to 4 show an image stabilizer including a driver of a moving magnet system according to a first embodiment of the present invention: FIG. 1 is an exploded perspective view; FIG. 2 is an assembled perspective view; FIG. 3 is a plan view; FIGS. 4A, 4B and 4C are a front view, a rear view and a left side view, respectively. FIGS. 5 to 8 show an image stabilizer including a driver of a moving coil system according to a second embodiment of the present invention: FIG. 5 is an exploded perspective view; FIG. 6 is an assembled perspective view; FIG. 7 is a plan view; and FIGS. 8A, 8B and 8C are a front view, a rear view and a left side view, respectively.

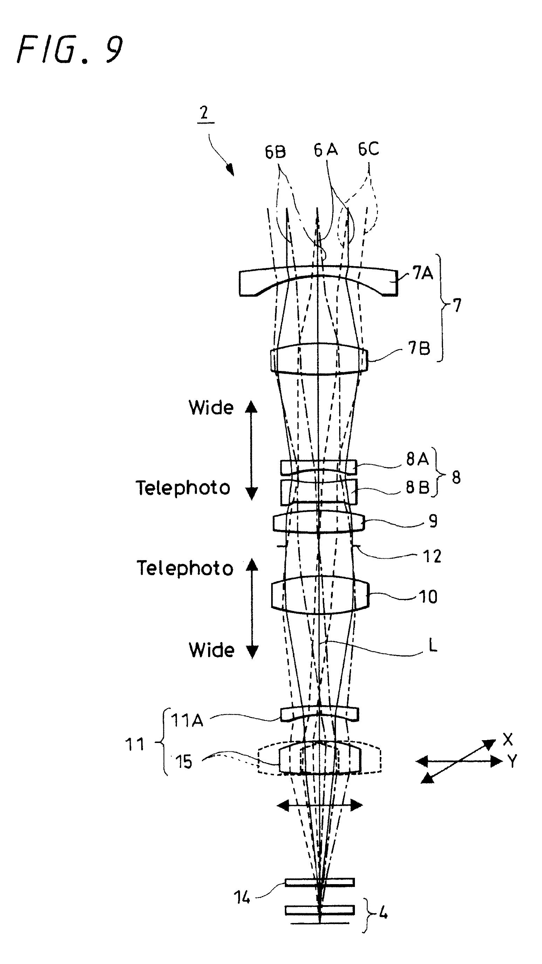

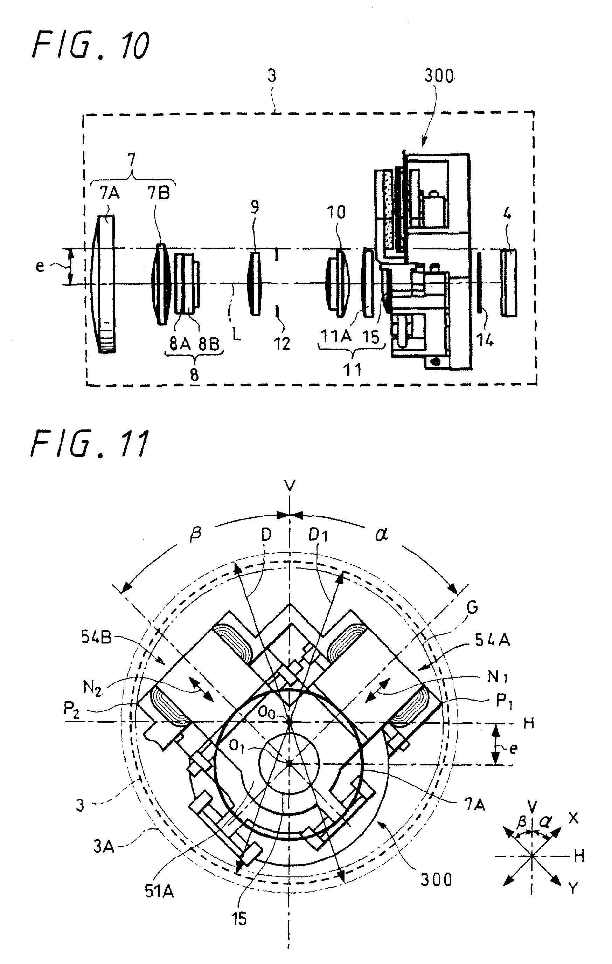

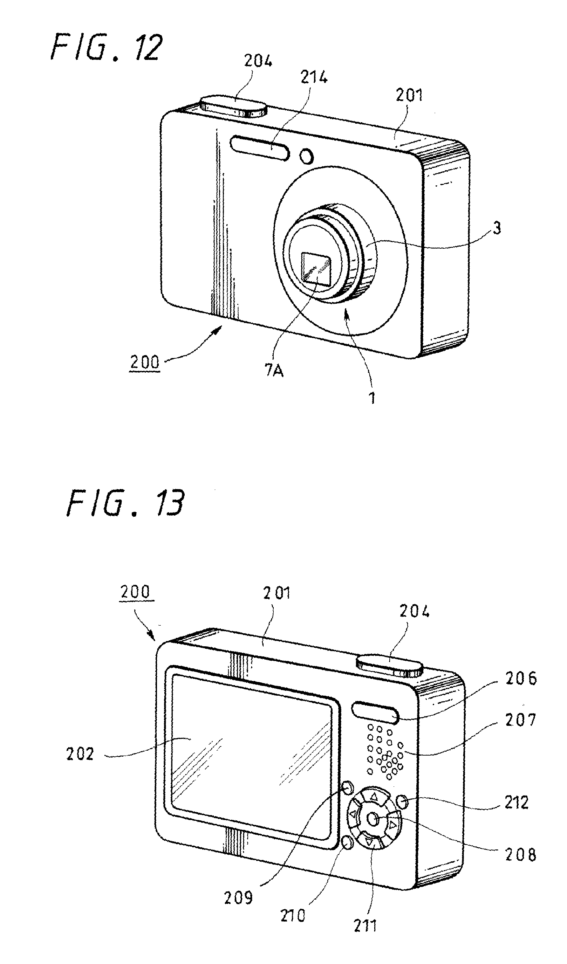

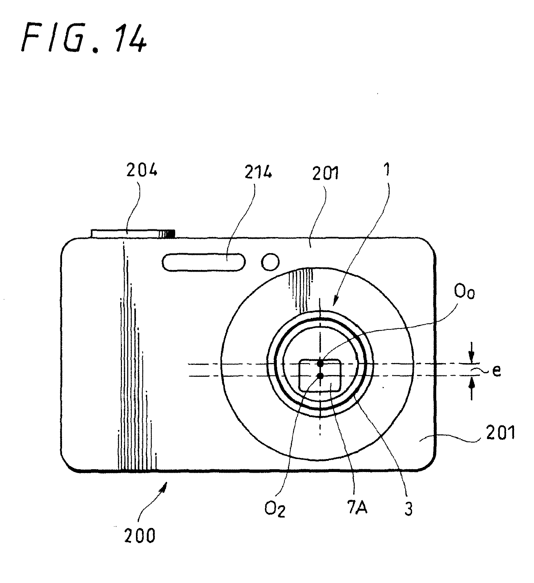

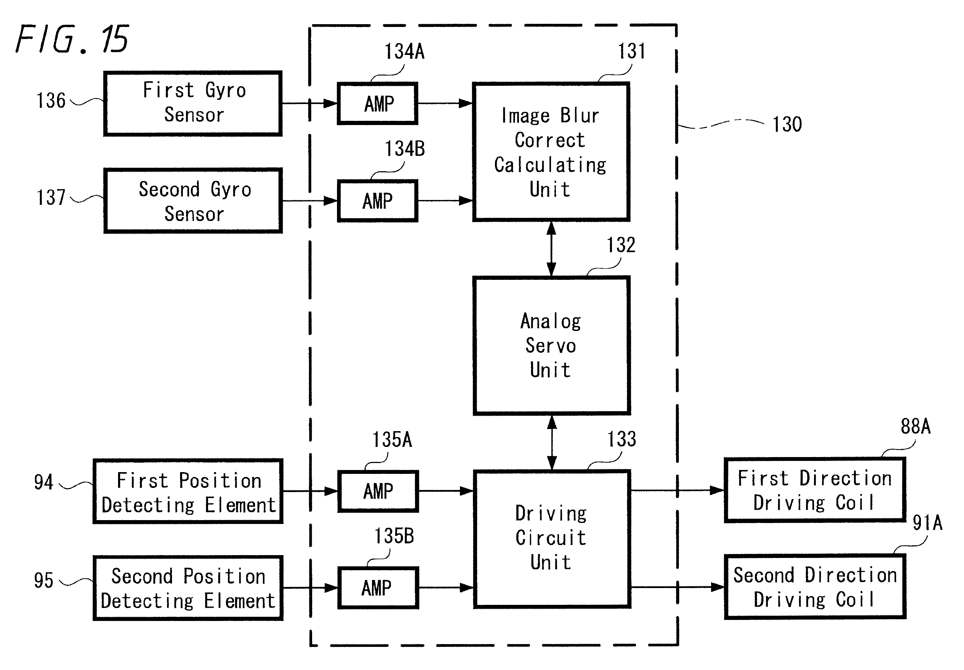

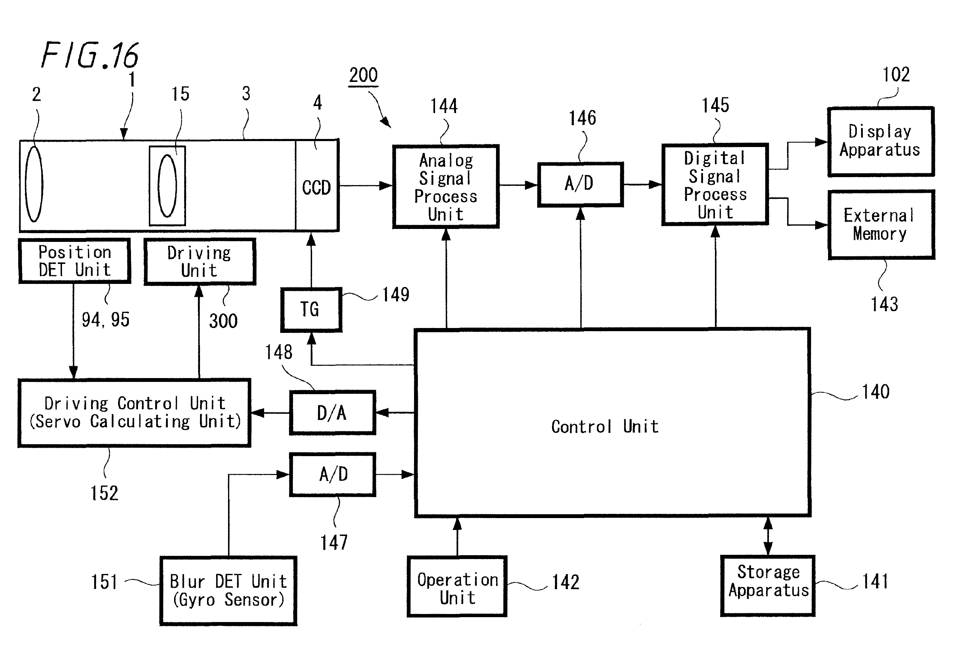

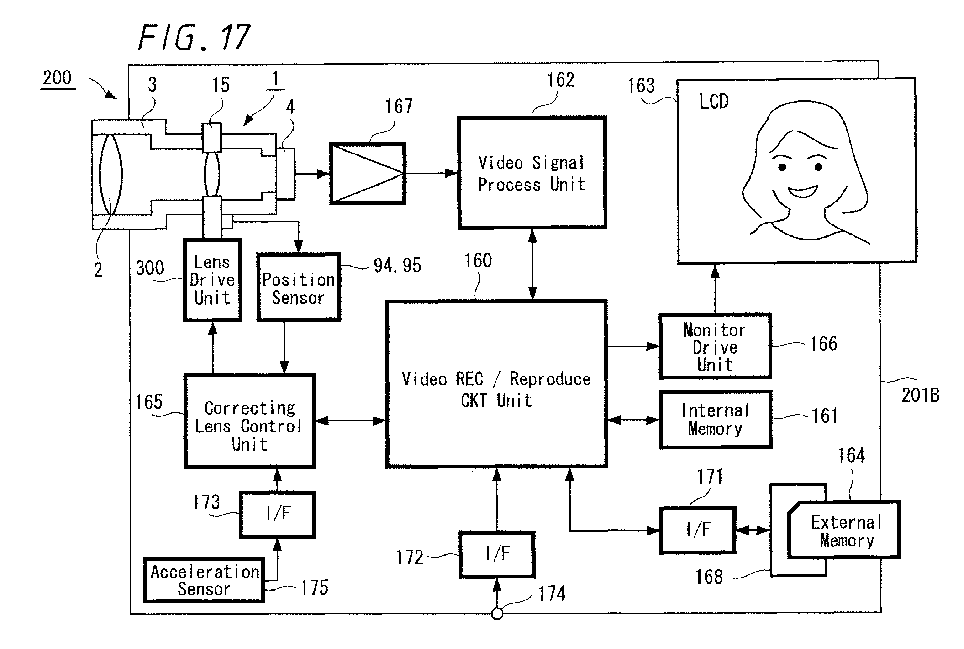

Further, FIGS. 9 to 11 explain a lens device according to a first embodiment of the present invention: FIG. 9 is an explanatory diagram of a lens system; FIG. 10 is a right side view of a lens device including an image stabilizer of a moving magnet system; and similarly, FIG. 11 is a plan view. FIG. 12 is a perspective view of a digital still camera representing a first example of an imager apparatus according to an embodiment of the present invention, as seen from the front side; similarly FIG. 13 is a perspective view of a digital still camera, as seen from the rear side; and similarly, FIG. 14 is a front view. FIG. 15 is a block diagram for explaining the concept of the control by an image stabilizer according to an embodiment of the present invention; FIG. 16 is a block diagram showing a first practice example of the schematic configuration of an imager apparatus according to an embodiment of the present invention; and similarly FIG. 17 is a block diagram showing a second practice example of the schematic configuration of an imager apparatus.

As shown in FIGS. 9 to 11, a lens device 1 representing a first embodiment of the present invention includes a lens system 2, a lens barrel 3, a CCD (solid-state imaging device) 4, an image stabilizer 300 and the like. The lens system 2 has five group lenses in which a plurality of lenses are disposed on the same optical axis L. The lens barrel 3 supports the lenses of this lens system 2 in a fixed or movable manner. The CCD 4, representing a specific example of an imager, is arranged on the optical axis L of the lens system 2 and is fixed to the lens barrel 3. The image stabilizer 300 is attached to the lens barrel 3 and stabilizes images of the lens system 2.

As shown in FIG. 9 and other figures, the lens system 2 in the lens device 1 includes five group lenses 7 to 11 in which five lens groups are disposed on the same optical axis L. Of the five group lenses 7 to 11, the first-group lens 7 positioned at the front end includes: a first lens 7A which is an objective lens facing a subject; and a second lens 7B arranged on the side opposite to the subject regarding this objective lens 7A. Light passing through the objective lens 7A and the second lens 7B of the first-group lens 7 is incident on the second-group lens 8.

The second-group lens 8 is a combination of a third lens 8A and fourth lens 8B, and is constructed in such a manner as to be movable on the optical axis L. Light passing through the second-group lens 8 enters a third-group lens 9. The third-group lens 9 is formed of a fifth lens fixed to the lens barrel 3. Behind the third-group lens 9 is provided a fourth-group lens 10 formed of a sixth lens. Between the fourth-group lens 10 and the third-group lens 9 is provided an iris mechanism 12 capable of adjusting the amount of light which passes through the lens system 2. The fourth-group lens 10 is constructed in such a manner as to be movable on the optical axis L.

Behind the fourth group lens 10 is provided a fifth-group lens 11 formed of a seventh lens 11A and of a correcting lens 15 described later on. Of the components of the fifth-group lens 11, the seventh lens 11A is fixed to the lens barrel 3, the correcting lens 15 is provided behind this seventh lens 11A in a movable manner, and further, a CCD 4 is provided behind the correcting lens 15.

The second-group lens 8 and the fourth-group lens 10 are movable in the direction of the optical axis independently and separately along the optical axis L. By moving the second-group lens 8 and the fourth-group lens 10 in predetermined directions, zoom adjustment and focus adjustment can be performed. Specifically, at the time of zooming, by moving the second-group lens 8 and the fourth-group lens 10 from wide to telephoto, zoom adjustment is carried out. Also, at the time of focusing, by moving the fourth-group lens 10 from wide to telephoto, focus adjustment can be carried out.

The CCD 4 is fixed to a CCD adaptor and is attached to the lens barrel 3 by means of this CCD adaptor. In front of the CCD 4 is provided an optical filter 14, and between this optical filter 14 and the seventh lens 11A is provided the image stabilizer 300 having the correcting lens 15. The image stabilizer 300 that is later described in detail is for stabilizing picked-up images blurred by vibration of the lens system 2 or the like by the correcting lens 15. In its normal state, the correcting lens 15 is installed such that the optical axis thereof coincides with the optical axis L of the lens system 2. Then, when an image is blurred on the focusing plane of the CCD 4 owing to vibration of a camera or the like, the image blurring on the focusing plane is stabilized by the image stabilizer 300 which moves the correcting lens 15 in two directions (a first direction X and second direction Y) perpendicular to the optical axis L.

FIGS. 1 to 4 show an image stabilizer according to a first embodiment of the present invention. This first embodiment is an image stabilizer 300 including a driver of a moving magnet system. Further, FIGS. 5 to 8 show an image stabilizer according to a second embodiment of the present invention. This second embodiment is an image stabilizer 301 including a driver of a moving coil system.

The image stabilizer 300 explained as a first embodiment has a structure shown in FIGS. 1 to 4. This image stabilizer 300 includes: the above-mentioned correcting lens 15, a first moving frame 51A, a second moving frame 52A, a fixed base board 53A, an actuator 54, position detectors (hall elements) 94 and 95, and the like. The first moving frame 51A supports the correcting lens 15. The second moving frame 52A supports the first moving frame 51A in a movable manner in a first direction X perpendicular to the optical axis L of the lens system 2. The fixed base board 53A supports the second moving frame 52A in a movable manner in a second direction Y perpendicular to the optical axis L and perpendicular to the first direction X. The actuator 54, representing a specific example of a driver, moves the first moving frame 51A in the first direction X and moves the second moving frame 52A in the second direction Y. The position detectors (hall elements) 94 and 95 detect the position of the correcting lens 15.

When the camera which will be described later on is shaken or vibrated by camera shake or the like, the correcting lens 15 stabilizes blurred image by its position being moved in the first direction X and/or in the second direction Y corresponding to the amount of image blurring at that time. The first moving frame 51A holding the correcting lens 15 has a ring-shaped lens fixed portion 51a and two yoke fixed portions 51b and 51c integrally installed therewith. At the center of the lens fixed portion 51a is provided a fitting hole 58 in which the correcting lens 15 is fitted and fixed by a fastening mechanism such as adhesive. Further, the two yoke fixed portions 51b and 51c are positioned on the outside of the lens fixed portion 51a rotationally shifted from each other approximately by 90° in the radial direction.

The second yoke fixed portion 51c in the first moving frame 51A constitutes a first main bearing portion 61. Further, a first sub bearing portion 62 is provided on the opposite side of the lens fixed portion 51a with the correcting lens 15 in between. A first main guide shaft 63 penetrates the first main bearing portion 61 in a horizontal direction, and the first main guide shaft 63 is pressed and fixed to the first main bearing portion 61 in the middle portion thereof. Further, the first sub bearing portion 62 is provided with a bearing groove 64 opened on the side thereof, and a first sub guide shaft 65 is engaged with the bearing groove 64 in a freely slidable manner.

A first yoke 66A and second yoke 66B constituting a magnetic path are integrally fixed to the first yoke fixed portion 51b and second yoke fixed portion 51c, respectively. The first yoke 66A and the second yoke 66B are U-shaped in a similar manner. Each of the yokes 66A and 66B is attached to the first moving frame 51A with two pieces 66a and 66b opposed to each other being arranged in a vertical direction, and with a joint piece 66c, which joins the upper and lower pieces 66a and 66b vertically opposed to each other, being fixed to the yoke fixed portion 51b and 51c by a fastening mechanism such as adhesive.

The upper and lower pieces 66a and 66b in each of the first and second yokes 66A and 66B are both rectangular in shape, and magnets 67A and 67B formed of rectangular boards are integrally fixed to the inner surfaces of the upper pieces 66a and 66a by a fastening mechanism such as adhesive. The magnets 67A and 67B are constructed such that polarity differs in the widthwise direction; in this embodiment, regarding the first magnet 67A, the north pole is set on the inside near the correcting lens 15, whereas regarding the second magnet 673, the south pole is set on the inside. However, polarities of the first and second magnets 67A and 67B may be arranged in the opposite manner to this embodiment; in addition, it should be appreciated that both the magnets may have their north poles on the inside or have their south poles on the inside.

It should be noted that the first and second magnets 67A and 67B are arranged on the upper and lower sides regarding the upper and lower pieces 66a and 66b of the yokes 66A and 66B respectively, and are fixed to the inner surface of the respective pieces 66a and 66b. However, a structure including magnets fixed only to the upper pieces 66a (or to the lower pieces 66b as an alternative) as shown in this embodiment enables the whole of the image stabilizer 300 to be thin.

The second moving frame 52A is formed to be a perforated member whose plane is ring-shaped, and the fitting hole 58 of the first moving frame 51A is opposed to a through-hole 68 at the center thereof. On one side of the second moving frame 52A with respect to one diametral direction is provided a second main bearing portion 71 including two bearing pieces 71a and 71b protruding upward. In the end portions of the two bearing pieces 71a and 71b are provided bearing holes 71c which penetrate laterally. In the bearing holes 71c, protruding parts at both ends of the first main guide shaft 63 fixed to the first moving frame 51A are inserted in a freely slidable manner and are supported in a freely turnable manner.

Further, on the opposite side to the second main bearing portion 71 of the second moving frame 52A is provided a second sub bearing portion 72 including two bearing pieces 72a and 72b protruding upward. Both ends of the first sub guide shaft 65 are supported by the two bearing pieces 72a and 72b. A direction in which the first sub guide shaft 65 supported by the second sub bearing portion 72 extends is designated as a second direction Y in this embodiment. A third main bearing portion 75 is provided on one side of the second moving frame 52A, and a third sub bearing portion 76 is provided on the opposite side thereto with the through-hole 68 in between, in a direction perpendicular to this second direction Y. A second main guide shaft 77 penetrates the third main bearing portion 75, and the second main guide shaft 77 is pressed and fixed to the third main bearing portion 75 in the middle portion thereof. Further, the third sub bearing portion 76 is provided with a bearing groove 78 opened on the side thereof, and a second sub guide shaft 79 engages with the bearing groove 78 in a freely slidable manner.

The fixed base board 53A showing a specific example of a supporting frame has a ring-shaped base portion 53a and two coil supporting portions 53b and 53c integrally installed therewith and is shaped corresponding to the first moving frame 51A. The two coil supporting portions 53b and 53c are provided at positions on the outside of the base portion 53a rotationally shifted from each other approximately by 90° in the radial direction. A through-hole 81 is provided at the center of the base portion 53a. The through-hole 81 is arranged to be approximately concentric with the fitting hole 58 of the first moving frame 51A and the through-hole 68 of the second moving frame 52A.

The two coil supporting portions 53b and 53c in the fixed base board 53A have two supporting pieces 341a and 341b respectively, provided at a predetermined interval in a tangential direction to the base portion 53a and protruding upward. The two supporting pieces 341a and 341b of the coil supporting portion 53b on one side constitute a fourth main bearing portion 82, and the supporting pieces 341a and 341b are each provided with a bearing hole 342. Further, a fourth sub bearing portion 83 including two bearing pieces 83a and 83b is provided at a peripheral portion of the base portion 53a in the fixed base board 53A on the opposite side to the first coil supporting portion 53b with the through-hole 81 in between.

In the bearing holes 342 of the two supporting pieces 341a and 341b in the fourth main bearing portion 82, the protruding portions at both ends of the second main guide shaft 77 of the second moving frame 52A are inserted in a freely slidable manner and are supported in a freely turnable manner. Further, both ends of the second sub guide shaft 79 are fixed to the two bearing pieces 83a and 83b in the fourth sub bearing portion 83 and are thus supported. In this embodiment, the axial direction of the first main guide shaft 63 and first sub guide shaft 65 is designated as a first direction X, and the axial direction of the second main guide shaft 77 and second sub guide shaft 79 extending perpendicularly thereto is designated as a second direction Y.

Between the lower piece 66b of the first yoke 66A fixed to the first moving frame 51A and the first magnet 67A are provided a magnetic plate 86A, a first coil mounting portion 87a and a first coil 88A, which are fixed to the first coil supporting portion 53b of the fixed base board 53A, in *a noncontact* state. Further, between the lower piece 66b of the second yoke 66B fixed to the first moving frame 51A and the second magnet 67B are provided a magnetic plate 86B, a second coil mounting portion 87b and a second coil 91A, which are fixed to the second coil supporting portion 53c of the fixed base board 53A, in a noncontact state.

Further, regarding the coil supporting portions 53b and 53c, the magnetic plates 86A and 86B formed of a magnetic material being thin plates are each provided between the two supporting pieces 341a and 341b like a bridge. The magnetic plates 86A and 86B are fixed to the coil supporting portions 53b and 53c respectively by a fastening mechanism such as adhesive. A flexible printed circuit board 87 is mounted on these magnetic plates 86A and 86B.

The two magnetic plates 86A and 86B relatively attract the first moving frame 51A and the second moving frame 52A as well as the second moving frame 52A and the fixed base board 53A by being attracted by the magnetic force of the magnets 67A and 67B. Thus, the two magnetic plates have the main function of removing looseness generated between the first moving frame 51A and the second moving frame 52A and looseness generated between the second moving frame 52A and the fixed base board 53A. In addition, the magnetic plates 86A and 86B have the function of reinforcing the strength of the flexible printed circuit board 87. As a material for the magnetic plates 86A and 86B, a variety of materials such as iron, nickel, cobalt, alloys thereof and so forth are applicable as long as they are attracted by the magnets.

The flexible printed circuit board 87 has the first coil mounting portion 87a and second coil mounting portion 87b which are approximately similar to the magnetic plates 86A and 86B in size; and both the coil mounting portions 87a and 87b are joined by a joint portion 87c, forming a single unit. The first coil mounting portion 87a and second coil mounting portion 87b are disposed to overlap with the two magnetic plates 86A and 86B fixed to the two coil supporting portions 53b and 53c in the fixed base board 53A. The first coil 88A is mounted on the first coil mounting portion 87a and the second coil 91A is mounted on the second coil mounting portion 87b, both of which are fixed by a fastening mechanism such as adhesive.

Formed of levelly-wound flat coils having an approximately elliptical shape, the first coil 88A and second coil 91A are both electrically connected to predetermined wiring patterns provided on the upper surfaces of the coil mounting portions 87a and 87b of the flexible printed circuit board 87. The first coil 88A and second coil 91A are each formed by winding one coil wire. Regarding each of the coils 88A and 91A, the two linear portions on the lengthwise side which are opposed to each other in the widthwise direction are thrust-generating portions 88a and 88b and thrust-generating portions 91a and 91b generating thrust as actuators. The first coil 88A is arranged with the thrust-generating portions 88a and 88b extending in a direction perpendicular to the first direction X, whereas the second coil 91A is arranged with the thrust-generating portions 91a and 91b extending in a direction perpendicular to the second direction Y.

After being assembled, the thrust-generating portion 88a on the inside of the first coil 88A is opposed to a magnetic pole portion on the inside of the first magnet 67A (the north pole in this embodiment), and the thrust-generating portion 88b on the outside of the first coil 88A is opposed to a magnetic pole portion on the outside of the first magnet 67A (the south pole in this embodiment). Also, the thrust-generating portion 91a on the inside of the second coil 91A is opposed to a magnetic pole portion on the inside of the second magnet 67B (the south pole in this embadiment), and the thrust-generating portion 91b on the outside of the second coil 91A is opposed to a magnetic pole portion on the outside of the second magnet 67B (the north pole in this embodiment).

The first coil 88A, the first magnet 67A and the first yoke 66A, which have been mentioned above, constitute a first electric actuator 54A that is a specific example of a first driver for moving the correcting lens 15 in the first direction X by means of the first moving frame 51A. The first main and sub bearing portions 61 and 62 of the first moving frame 51A, the first main and sub guide shafts 63 and 65, and the second main and sub bearing portions 71 and 72 constitute a first guide which guides the correcting lens 15 in the first direction X perpendicular to the optical axis L of the lens system 2 by means of the first moving frame 51A.

Further, the second coil 91A, the second magnet 67B and the second yoke 66B constitute a second electric actuator 54B that is a specific example of a second driver for moving the correcting lens 15 in the second direction Y by means of the second moving frame 52A. The third main and sub bearing portions 75 and 76 of the second moving frame 52A, the second main and sub guide shafts 77 and 79, and the fourth main and sub bearing portions 82 and 83 constitute a second guide which guides the correcting lens 15 in the second direction Y perpendicular to the optical axis L of the lens system 2 and perpendicular to the first direction X by means of the second moving frame 52A.

Thus, upon applying an electric current to the first coil 88A or second coil 91A, magnetic force generated by the first magnet 67A or second magnet 67B acts in a direction perpendicular to the coil 88A or 91A. Therefore, thrust N₁ which advances in the first direction X is generated in the first actuator 54A and thrust N₂ which advances in the second direction Y is generated in the second actuator 54B according to Fleming's left-hand rule.

In this regard, in the first coil 88A (in the second coil 91A as well), there are two thrust-generating portions 88a and 88b (91a and 91b) formed of linear portions generating thrust, and electric currents flow in opposite directions in the two portions. However, magnetic force of the first magnet 67A in opposite directions acts on the thrust-generating portions 88a and 88b (91a and 91b). Therefore, thrust generated in the two thrust-generating portions 88a and 88b (91a and 91b) is directed in the same direction if viewed as a whole coil, and the combined force of the thrust becomes the thrust N₁ by the first actuator 54A (the thrust N₂ by the second actuator 54B), thereby acting as the force which moves the correcting lens 15 in the first direction X that is the predetermined direction (the second direction Y in the case of the second actuator 54B).

It should be noted that the two bearing pieces 71a and 71b of the second main bearing portion 71 are formed apart from each other by the distance obtained by adding the length necessary for the first moving frame 51A to move in the first direction X to the length of the first main bearing portion 61 in the first direction X. Hence, the first moving frame 51A is capable of moving in the first direction X by the distance obtained by subtracting the length of the first main bearing portion 61 from the distance between the two bearing pieces 71a and 71b. Also, the two supporting pieces 341a and 341b of the fourth main bearing portion 82 are formed apart from each other by the distance obtained by adding the length necessary for the second moving frame 52A to move in the second direction Y to the length of the third main bearing portion 75 in the second direction Y. Hence, the second moving frame 52A is capable of moving in the second direction Y by the distance obtained by subtracting the length of the third main bearing portion 75 from the distance between the two supporting pieces 341a and 341b.

Also, in this embodiment, the magnetic plates 86A and 86B are attached to the coil supporting portions 53b and 53c of the fixed base board 53A, and the coil supporting portions 53b and 53c having those magnetic plates 86A and 86B are arranged between the upper and lower pieces 66a and 66b of the yokes 66A and 663. Therefore, by attracting the yokes 66A and 66B having the magnets 67A and 67B to the magnetic plates 86A and 86B, looseness caused between the first moving frame 51A and the second moving frame 52A and looseness caused between the second moving frame 52A and the fixed base board 53A can be removed. Thus, since the first moving frame 51A and the second moving frame 52A can be moved relatively and the second moving frame 52A and the fixed base board 53A can be moved relatively without looseness, movement of the correcting lens 15 can be controlled accurately and smoothly.

Specifically, the first moving frame 51A and the second moving frame 52A are joined and supported in a movable manner by the first bearing portions and the second bearing portions, and the second moving frame 52A and the fixed base board 53A are joined and supported in a movable manner by the third bearing portions and the fourth bearing portions. Each of the first to fourth bearing portions includes a shaft and bearing portion thereof, and in order to secure sliding motion regarding each bearing portion, there needs to be space (looseness) between the shaft and bearing portion. As a result, there is a problem in which looseness is inevitably generated due to the space, and the looseness makes it difficult to control the movement of the correcting lens 15 accurately, however, in this embodiment, such a problem can be solved.

Further, in order to drive and control the correcting lens 15, it is preferable to provide a position detector which detects the position of the correcting lens 15. As the position detector, hall elements which detect the magnetic force of the magnets 67A and 67B can be used, for example. For example, two hall elements 94 and 95 (see FIG. 15) are used to detect the position of each edge of long and short sides of the magnet 67A (or 67B), and the position of the correcting lens 15 is detected from the positions. With a control device calculating the position of the correcting lens 15 based upon signals detected from the hall elements 94 and 95, the correcting lens 15 can be driven and controlled accurately.

Although not shown in the drawings, it is preferable to provide a temperature detector detecting the temperature in the vicinity of the actuator 54A, and when the ambient temperature is a predetermined value or more, temperature correction is performed in addition to stabilizing images blurred by camera shake, a vibration or the like. By adding temperature control in this manner, highly accurate position control can be performed regarding the correcting lens 15. As the temperature detector, a thermistor can be used, for example. It is preferable that the hall elements and thermistor be installed on the flexible printed circuit board 87 to be used in the vicinity of the coils 88A and 91A, for example.

The image stabilizer 300 with the above-mentioned structure can be assembled as follows, for example. First, as shown in FIG. 1, the first and second magnetic plates 86A and 86B are fixed to one surface of the first and second coil mounting portions 87a and 87b in the flexible printed circuit board 87, and the first and second coils 88A and 91A are mounted on the surface of the opposite side. Thus, a coil assembly is provided in which the two magnetic plates 86A and 86B, the flexible printed circuit board 87 and the two coils 88A and 91A are integrated. The two magnetic plates 86A and 86B of this coil assembly are installed on the two coil supporting portions 53b and 53c in the fixed base board 53A to be fixed.

Next, the second moving frame 52A is placed facing the base portion 53a of the fixed base board 53A from above, and the bearing groove 78 provided in the third sub bearing portion 76 of the second moving frame 52A is engaged in a freely slidable manner with the second sub guide shaft 79 fixed and supported between the two bearing pieces 83a and 83b of the fourth sub bearing portion 83. Further, the third main bearing portion 75 of the second moving frame 52A is positioned between the two supporting pieces 341a and 341b of the fourth main bearing portion 82. Then, the second main guide shaft 77 is penetrated through the bearing holes 342 provided in the two supporting pieces 341a and 341b and through the through-hole in the third main bearing portion 75, and the protruding portions at both ends thereof are supported by the two supporting pieces 341a and 341b in a freely turnable manner and in a movable manner in the axial direction. Thus, the second moving frame 52A is supported with respect to the fixed base board 53A in a movable manner in a first direction that is one direction specified by a predetermined distance, namely by the amount obtained by subtracting the length of the third main bearing portion 75 from the distance between the inner surfaces of the two supporting pieces 341a and 341b of the fourth main bearing portion 82.

Next, the first and second yokes 66A and 68B, to which the magnets 67A and 67B are fixed, are fixed to the first moving frame 51A. The magnets 67A and 67B may be fixed to these yokes 66A and 66B after fixing the yokes 66A and 66B to the first moving frame 51A.

Subsequently, the first moving frame 51A is placed facing the second moving frame 52A from above, and the bearing groove 64 provided in the first sub bearing portion 62 of the first moving frame 51A is engaged in a freely slidable manner with the first sub guide shaft 65 fixed and supported between the two bearing pieces 72a and 72b of the second sub bearing portion 72. Further, the first main bearing portion 61 of the first moving frame 51A is positioned between the two bearing pieces 71a and 71b of the second main bearing portion 71. Then, the first main guide shaft 63 is penetrated through the bearing holes 71c provided in the two bearing pieces 71a and 71b and through the through-hole of the first main bearing portion 61. The protruding portions at both ends of the first main guide shaft 63 are supported by the two bearing pieces 71a and 71b in a freely turnable manner and in a movable manner in the axial direction. Thus, the first moving frame 51A is supported with respect to the second moving frame 52A in a movable manner in a second direction perpendicular to the first direction by a predetermined distance, namely, by an amount obtained by subtracting the length of the first main bearing portion 61 from the distance between the inner surfaces of the two bearing pieces 71a and 71b of the second main bearing portion 71.

In this regard, the first main guide shaft 63 protrudes from both ends of the first main bearing portion 61 with approximately the same length. Then, approximately the center of the first main guide shaft 63 is fixed and supported with the first main bearing portion 61 by means of press fitting or the like. Similarly, the second main guide shaft 77 protrudes from both ends of the third main bearing portion 75 with approximately the same length. Then, approximately the center of the second main guide shaft 77 is fixed and supported with the third main bearing portion 75 by means of press fitting or the like. Thus, assembly of the image stabilizer 300 is completed, and such image stabilizer 300 with a structure shown in FIGS. 2 to 4 is obtained.

Positions of the first moving frame 51A, the second moving frame 52A and the fixed base board 53A are determined by providing each member with a predetermined positioning hole to which a reference pin is inserted to determine the positions, for example. Accordingly, the first moving frame 51A and the second moving frame 52A are relatively fixed temporarily, and the second moving frame 52A and the fixed base board 53A are relatively fixed temporarily, resulting in the positions being adjusted easily and reliably.

The function of the image stabilizer 300 with the above-described structure is as follows, for example. The correcting lens 15 of this image stabilizer 300 is moved by selectively or simultaneously supplying a driving current of an appropriate value to the first coil 88A and the second coil 91A of the first and second actuators 54A via the flexible printed circuit board 87.

Specifically, the first coil 88A and second coil 91A of the image stabilizer 300 are fixed to the coil supporting portions 53b and 53c of the fixed base board 53A with the magnetic plates 86A and 86B and the flexible printed circuit board 87 placed in between. Hereupon, the thrust-generating portions 88a and 88b of the first coil 88A are extended in the second direction Y, and the thrust-generating portions 91a and 91b of the second coil 91A are extended in the first direction X. Further, the two magnets 67A and 67B fixed to the upper pieces 66a of the two yokes 66A and 66B fixed to the first moving frame 51A are arranged above the coils 88A and 91A.

As a result, the magnetic flux of a first magnetic circuit formed by the first yoke 66A and the first magnet 67A acts in such a manner as to penetrate through the thrust-generating portions 88a and 88b of the first coil 88A in the vertical direction. Similarly, the magnetic flux of a second magnetic circuit formed by the second yoke 66B and the second magnet 67B acts in such a manner as to penetrate through the thrust-generating portions 91a and 91b of the second coil 91A in the vertical direction. In this regard, the first and second coils 88A and 91A are fixed to the fixed base board 53A, whereas the first and second yokes 66A and 66B and the first and second magnets 67A and 67B are fixed to the first moving frame 51A which is supported in a movable manner in the first direction X and in the second direction Y within a predetermined range with respect to the fixed base board 53A, and the correcting lens 15 is held by the first moving frame 51A.

Thus, with the function of the first guide and second guide, the correcting lens 15 is capable of freely moving both in the first direction X and in the second direction Y within a predetermined range. Furthermore, the two magnets 67A and 67B are attracted (or pressed) to the two magnetic plates 86A and 86B due to the magnetic force thereof. As a result, looseness (space) between the first moving frame 51A and the second moving frame 52A and looseness (space) between the second moving frame 52A and the fixed base board 53A are absorbed, enabling a looseness-free state to be obtained at each joint portion. Accordingly, the movement of the correcting lens 15 can be controlled accurately and smoothly.

Upon applying an electric current to the first coil 88A (a similar function is obtained in the case of the second coil 91A as well), the electric current flows in the second direction Y in the thrust-generating portions 88a and 88b, since the thrust-generating portions 88a and 88b are extended in the second direction Y (in the first direction X in the case of the second coil 91A). In this regard, since the magnetic flux of the first magnetic circuit acts in a vertical direction perpendicular to the thrust-generating portions 88a and 88b, force directed in the first direction X (second direction Y in the case of the second coil 91A) acts on the first magnet 67A (second magnet 67B in the case of the second coil 91A) and the first yoke 66A (second yoke 66B in the case of the second coil 91A) according to Fleming's rule.

Thus, the first moving frame 51A, to which the first yoke 66A is fixed, moves in the first direction X. As a result, the correcting lens 15 held by the first moving frame 51A moves in the first direction X, being guided by the first guide, correspondingly to the intensity of the electric current applied to the first coil 88A.

Also, if electric currents are simultaneously applied to the first coil 88A and the second coil 91A, the movement by the first coil 88A and the movement by the second coil 91A, both of which have been mentioned above, are conducted in a combined manner. Specifically, the correcting lens 15 moves in the first direction X due to the electric current which flows through the first coil 88A, and at the same time the correcting lens 15 moves in the second direction Y due to the electric current which flows through the second coil 91A. As a result, the correcting lens 15 moves in a diagonal direction, thereby stabilizing images of the lens system 2.

The image stabilizer 301 shown in FIGS. 5 to 8 represents a modified embodiment of the image stabilizer 300 shown in FIGS. 1 to 4, and is an image stabilizer with an electric actuator of a moving coil system. This image stabilizer 301 includes the two magnets 67A and 67B and the two coils 88A and 91A in the image stabilizer 300 shown in the aforementioned embodiment, however, the positions thereof are switched and the driver is constructed as a moving coil system. Regarding this image stabilizer 301, the same reference numerals are given to portions corresponding to those in the image stabilizer 300 and duplicate explanations thereof are omitted.

The image stabilizer 301 includes a first moving frame 51B, a second moving frame 52A and a fixed base board 53B. The first moving frame 51B has a ring-shaped lens-fixed portion 51a and two coil fixed portions 51b and 51c integrally provided therewith. The two coil fixed portions 51b and 51c are positioned on the outside of the lens fixed portion 51a in the radial direction, rotationally shifted from each other approximately by 90°. At the center of the lens fixed portion 51a is provided a fitting hole 58 in which a correcting lens 15 is fitted and fixed.

On the first coil fixed portion 51b is installed a first coil mounting portion 87a of a flexible printed circuit board 87, with a first magnetic plate 86A in between. Further, on the second coil fixed portion 51c is installed a second coil mounting portion 87b of the flexible printed circuit board 87, with a second magnetic plate 86B in between. Then, on the first and second coil mounting portions 87a and 87b are mounted first and second coils 88A and 91A, which are electrically connected to wiring patterns of the coil mounting portions 87a and 87b. It should be noted that the structure of the second moving frame 52A is similar to that in the aforementioned embodiment.

The structure of the fixed base board 53B is approximately the same as that of the aforementioned fixed base board 53A in external shape. However, the shape of the supporting portion is slightly different in order to fix first and second yokes 66C and 66D. Specifically, the upper surfaces of two yoke supporting portions 53b and 53c of the fixed base board 53B are provided with fitting grooves 343 into which lower pieces 66b of the yokes 66C and 66D are fitted. The lower pieces 66b are fitted into these fitting grooves 343 to be fixed by a fastening mechanism such as adhesive. There is no modification in the basic form of the yokes 66C and 66D, however, joint portions 66c are provided with large opening holes 344 for weight reduction. The other structure is similar to that of the image stabilizer 300 shown in FIGS. 1 to 4.

In the second embodiment, also, the axial direction of a first main guide shaft 63 and first sub guide shaft 65 is designated as a first direction X, and the axial direction of a second main guide shaft 77 and second sub guide shaft 79 extending perpendicularly thereto is designated as a second direction Y, similarly to the aforementioned first embodiment. It should be appreciated that a first direction and a second direction may be set in the opposite manner also in this embodiment.

Further, between the lower piece 66b of the first yoke 66C fixed to the fixed base board 53B and a first magnet 67A are arranged: the first magnetic plate 86A, the first coil mounting portion 87a and the first coil 88A, which are fixed to the first coil fixed portion 51b of the first moving frame 51B, in a noncontact state. Further, between the lower piece 66b of the second yoke 66D fixed to the fixed base board 53B and a second magnet 67B are arranged: the second magnetic plate 86B, the second coil mounting portion 87b and the second coil 91A, which are fixed to the second coil fixed portion 51c of the first moving frame 51B, in a noncontact state.

Note that, in this embodiment, the first moving frame 51B and second moving frame 52A are forced away from the fixed base board 53B by attracting the first and second magnetic plates 86A and 86B with the first and second magnets 67A and 67B. However, the first moving frame 51B and second moving frame 52A can be forced toward the fixed base board 53B, by repelling the first and second magnetic plates 86A and 86B with the first and second magnets 67A and 67B.

With such structure, looseness at a first bearing portion and a second bearing portion which join the first moving frame 51B and the second moving frame 52A can be removed, and at the same time looseness at a third bearing portion and a fourth bearing portion which join the second moving frame 52A and the fixed base board 53B can be removed. Thus, the first and second moving frames 51B and 52A which hold the correcting lens 15 can be moved smoothly, and also, the correcting lens 15 can be held in a constant posture. Therefore, deterioration in optical performance caused by a change in the posture of the correcting lens 15 can be prevented.

As shown in FIGS. 10 and 11, the image stabilizer 300 or 301 with the aforementioned structure and function is installed in a lens barrel 3 to constitute a lens device 1. This lens device 1 is referred to as a retractable lens in which the side of the objective lens 7A is capable of moving back and forth within a predetermined range. By using this lens device 1, an imager apparatus with such an external appearance as shown in FIGS. 12 to 14 is constructed, for example.

Next, referring to FIG. 9, operation of the lens system 2 of the lens device 1, in which the image stabilizer 300 has been installed, is explained. When the objective lens 7A of the lens system 2 is aimed at a subject, light from the subject is input from the objective lens 7A to the inside of the lens system 2. Then, light passing through the objective lens 7A advances toward the CCD 4 along the optical axis L of the lens system 2. Specifically, light emitted from the second lens 7B of the first-group lens 7 passes through the second-group lens 8, the third-group lens 9 and the fourth-group lens 10, further passes through the seventh lens 11A and the correcting lens 15 of the fifth-group lens 11, and passes through the optical filter 14, thereby forming an image corresponding to the subject on the focusing screen of the CCD 4.

In this case, at the time of shooting, when camera shake and vibration are not applied to the lens device 1, light from the subject moves through each center portion of the first-group lenses 7 to fifth-group lenses 11 along the optical axis L as shown by the solid line of light 6A. Therefore, an image is formed at a predetermined position on the focal plane of the CCD 4, and an excellent image can be obtained without an image blur being caused.

On the other hand, at the time of shooting, when camera shake or vibration is applied to the lens device 1, light from the subject is input to the first-group lenses 7 in an inclined state as shown by the chain line of light 6B or shown by the broken line of light 6C. At each of lenses from the first-group lenses 7 to fifth-group lens 15, the incident light 6B, 6C passes through the lenses, deviating from the optical axis L; however, it is possible to correct the camera shake or the like by moving the correcting lens 15 by a predetermined amount in accordance with the camera shake or the like. Accordingly, an image is formed at a predetermined position on the focal plane of the CCD 4, and an excellent image can be obtained by eliminating an image blur.

Camera shake, vibration or the like regarding the lens device 1 is detected by means of a blur detector. As this blur detector, a gyro sensor can be used, for example. This gyro sensor is installed in a camera body along with the lens device 1, and acceleration, angular velocity, angular acceleration and the like which act on the lens device 1 caused by a vibration, camera shake and the like of a photographer's hands are detected. Information detected by the gyro sensor, such as acceleration and angular velocity, is supplied to a control device, and the electric actuator 54 is driven and controlled, thereby moving the first moving frame 51A and the second moving frame 52A so that an image is formed at a predetermined position on the focal plane of the CCD 4.

FIGS. 12 to 14 show a digital still camera 200 that is a first practice example of an imager apparatus according to an embodiment of the present invention. This digital still camera 200 uses a semiconductor recording medium as an information recording medium, and an optical image from a subject is converted to an electric signal in a CCD (solid-state imaging device) to be recorded in the semiconductor recording medium and to be displayed on a display apparatus formed of a flat display panel, such as a liquid crystal display.

As shown in FIG. 12 and other figures, the digital still camera 200 includes a camera body 201 formed of a horizontally long casing, and a lens device 1 which captures an image of a subject as light and leads it to a CCD 4 serving as an imager. Further, the camera body 201 includes a display apparatus 202 such as a liquid crystal display which displays an image based upon an image signal output from the CCD 4, a control device which controls the action of the lens device 1, the display of the display apparatus 202 and the like, a battery power source and the like not shown in the drawings.

On the upper surface of the camera body 201 are provided a shutter button 204 for shooting, and a power button not shown in the drawings. Further, as shown in FIG. 13, on the rear surface of the camera body 201 are provided: the flat display panel 202 that is a display device, a zoom button 206 with which zooming operation can be performed, a built-in loudspeaker 207, a control button 208, a menu button 209, a picture display button (LCD backlight ON/OFF) 210, four selection buttons 211, an image size/deletion button 212, and the like.

On the rear surface of the camera body 201, the flat display panel 202 is formed of a large size to occupy a large amount of space from the center to the left portion thereof. The zoom button 206 is arranged at the upper right position of the flat display panel 202, the built-in loudspeaker 207 is arranged under the zoom button, and the control button 208 and other operational buttons are arranged under the loudspeaker. With the zoom button 206, zooming operation can be performed when reproducing an image as well as when capturing the image.

The four selection buttons 211 are disposed on the upper and lower sides and on the left and right sides, around the control button 208. The four selection buttons 211 may be assigned to: play, stop, fast-forward, rewind and the like, for example, however, not limited to those operations. In addition, on the surface above the built-in loudspeaker 207 of the camera body 201 are provided a plurality of through holes, and sounds are emitted from the through holes to the outside.

As shown in FIG. 12, in the front surface of the camera body 201 are provided: the lens device 1 in which an objective lens 7A is exposed to the front, a flash apparatus 214 arranged at an upper right position regarding this lens device 1, and the like. As described earlier, the lens device 1 includes: a lens system 2 having a plurality of lenses including the objective lens 7A, a lens barrel 3 which supports the lenses of the lens system 2 in a fixed or movable manner, an image stabilizer 300 attached to the lens barrel 3, which stabilizes images in the lens system 2, and the like.

The lens barrel 3 in the lens device 1 includes: a fixed lens barrel fixed to the inside of the camera body 201 and a movable lens barrel held by the fixed lens barrel to be capable of moving back and forth. Specifically, the lens device 1 is what is called a retractable lens in which the lens on the side of the objective lens 7A is capable of moving back and forth within a predetermined range. As shown in FIG. 14 and other figures, with the center (axial center line) of the lens barrel 3 being designated as O₀ and the center (optical axis) of the objective lens 7A being designated as O₂, the center O₂ of the objective lens 7A is displaced downward in a vertical direction from the center O₀ of the lens barrel 3 by an appropriate distance e.

FIGS. 10 and 11 explain the state of the lens system 2 and the image stabilizer 300 stored in the lens barrel 3. FIG. 10 is a right side view and FIG. 11 is a front view. In FIG. 11, regarding the two axes intersecting each other at right angles, the horizontal axis represents a horizontal direction H and the vertical axis represents a vertical direction V, where the lateral direction is the horizontal direction H and the longitudinal direction is the vertical direction V, with an image of a subject formed on an imaging device such as a CCD being a reference.

The image stabilizer 300 is arranged in the lens barrel 3 as shown in FIG. 11. Specifically, with the center (axial center line) of the lens barrel 3 being designated as O₀ and the center (optical axis) of the correcting lens 15 being designated as O₁, the center O₁ of the correcting lens 15 is displaced in the vertical direction V (downward) from the center O₀ of the lens barrel 3 by an appropriate distance e. Further, a direction of the thrust N₁, N₂ (the first direction X and the second direction Y) generated by the electric actuators 54A and 54B is inclined by an angle α, β (α=β=45°) to the line connecting the center O₁ of the correcting lens 15 and the center O₀ of the lens barrel 3. In addition, as shown in FIG. 10, other lenses (first-group lenses and the like) than the correcting lens 15 in the lens system 2 are disposed on the same optical axis L to correspond with the optical axis of the correcting lens 15.

By arranging the image stabilizer 300 as described above, the space inside the lens barrel is efficiently used and a lens barrel can be small-sized, thereby obtaining a lens device small-sized as a whole. FIGS. 11 and 18 are provided for explaining that in detail.

In the case of the related-art technology explained referring to FIG. 18, the image stabilizer 300 is provide such that the center O₁ of the correcting lens 15 corresponds with the center O₀ of the lens barrel 3A. Further, the directions of the thrust N₁, N₂ generated by the electric actuators 54A and 54B correspond with the horizontal direction H and the vertical direction V respectively, and D is the internal diameter of the lens barrel 3A. However, since there is a large space on the opposite side to the electric actuators 54A and 54B, with the correcting lens 15 in between, the diameter of the lens barrel 3A is enlarged.

In the case of a lens device according to an embodiment of the present invention, on the contrary, the image stabilizer 300 is provided as shown in FIG. 11. Specifically, the center O₁ of the correcting lens 15 is displaced from the center O₀ of the lens barrel 3 by an appropriate distance e. Further, the directions of the thrust N₁, N₂ generated by the electric actuators 54A and 54B respectively form an angle of approximately 45° to the line connecting the center O₁ of the correcting lens 15 and the center O₀ of the lens barrel 3. Accordingly, the space in the hole of the lens barrel 3 on the opposite side to the electric actuators 54A and 543 across the correcting lens 15, namely, the space surrounded by the electric actuators 54A and 54B can be small (narrowed), thereby reducing the internal diameter of the lens barrel 3 to D₁.

The circle of a chain line shown in FIG. 11 denotes the internal diameter D of the lens barrel 3A shown in FIG. 18. Specifically, the internal diameter D₁ of a lens barrel 3 according to an embodiment of the present invention can be made smaller than the internal diameter D of a lens barrel 3A of the related-art technology by D-D₁. As a result, the lens device 1, and digital still camera 200 including the lens device 1 can be small-sized.

Further, the circle of a two-dot chain line indicated by the symbol G in FIG. 11 represents a hypothetical circle circumscribing the image stabilizer 300 according to an embodiment of the present invention. This hypothetical circle G circumscribes edges P₁ and P₂ of the first and second electric actuators 54A and 54B of the image stabilizer 300. In the case of this embodiment, the image stabilizer 300 is arranged such that the center of the hypothetical circle G approximately corresponds with the center O₀ of the lens barrel 3. Specifically, the distance e by which the center O₁ of the correcting lens 15 is displaced from the center O₀ of the lens barrel 3 is the distance between the center O₁ of the correcting lens 15 and the center of the hypothetical circle G circumscribing the image stabilizer 300. Accordingly, the whole of the image stabilizer 300 can be arranged approximately at the center in the hole of the lens barrel 3, and thus the internal diameter D₁ of the lens barrel 3 can be smallest.

In the present embodiment, the center O₁ of the correcting lens 15 is displaced from the center O₀ of the lens barrel 3 in the vertical direction V. However, regarding a lens device according to an embodiment of the present invention, the center O₁ of the correcting lens 15 can be displaced from the center O₀ of the lens barrel 3 in a direction arbitrarily determined. In this regard, considering the arrangement of actuators including a focus mechanism, zoom mechanism, shutter mechanism and the like and offsetting the optical axis of the correcting lens 15, namely, the optical axis of the lens system 2 from the center of the lens barrel, components can be arranged efficiently and an apparatus can be small-sized.

Further, in the present embodiment, what is called a direct acting lens is used and explained as the lens device 1, in which all lenses and the like are disposed on the same axial center line. However, a lens device according to an embodiment of the present invention may have a lens system in which an optical axis is bent by a prism, mirror or the like. In this case, when the posture of an imager apparatus is correct, first and second moving frames which hold a correcting lens in a freely movable manner are not pulled by gravity. Therefore, there is no need to continuously apply an electric current to an image stabilizer in order to hold up the first and second moving frames in a direction opposed to gravity. As a result, power consumption can be reduced greatly in the case of capturing images with the correct posture of the imager apparatus, and the imager apparatus can be used for a long period of time.

FIG. 15 is a block diagram explaining the control concept of the above-described image stabilizer 300. A control unit 130 includes: an image stabilization calculating unit 131; an analog servo unit 132; a driving circuit unit 133; four amplifiers (AMP) 134A, 134B, 135A and 135B; and the like. To the image stabilization calculating unit 131 are connected a first gyro sensor 136 via the first amplifier (AMP) 134A, and a second gyro sensor 137 via the second amplifier (AMP) 134B.

The first gyro sensor 136 detects the amount of displacement in the first direction X caused by a camera shake or the like applied to the camera body 201, and the second gyro sensor 137 detects the amount of displacement in the second direction Y caused by camera shake or the like applied to the camera body 201. Although an example in which the amount of displacement in the first direction X and the amount of displacement in the second direction Y are separately detected by providing two gyro sensors has been explained in this embodiment, needless to say, the amount of displacement in the two directions, the first direction X and second direction Y, may be detected by one gyro sensor.

The analog servo unit 132 is connected to the image stabilization calculating unit 131. The analog servo unit 132 converts a value calculated by the image stabilization calculating unit 131 from a digital value to an analog value, and outputs a control signal corresponding to the analog value. The driving circuit unit 133 is connected to the analog servo unit 132. To the driving circuit unit 133 are connected: the first hall element 94, which is a first position-detecting element, via the third amplifier (AMP) 135A; and the second hall element 95, which is a second position-detecting element, via the fourth amplifier (AMP) 135B. Further, to the driving circuit unit 133 are connected: the first coil 88A, which is a first-direction driving coil; and the second coil 91A, which is a second-direction driving drive coil.

The amount of displacement of the first moving frame 51A in the first direction X, detected by the first hall element 94, is input to the driving circuit unit 133 via the third amplifier 135A. Also, the amount of displacement of the second moving frame 52A in the second direction Y, detected by the second hall element 95, is input to the driving circuit unit 133 via the fourth amplifier 1358. Based upon the input signals and the control signal from the analog servo unit 132, the driving circuit unit 133 outputs a predetermined control signal to either the first coil 88A or the second coil 91 or to both of them, in order to move the correcting lens 15 for stabilizing images.

FIG. 16 is a block diagram showing a first embodiment of a schematic configuration of a digital still camera 200 provided with an image stabilizer 300 having the above-described structure and functions. This digital still camera 200 includes a lens device 1, a control unit 140, a storage apparatus 141, an operation unit 142, a display apparatus 102, an external memory 143 and the like. The lens device 1 has an image stabilizer 300. The control unit 140 plays a central role in a control device. The storage apparatus 141 has a program memory, data memory, other RAM/ROM or the like for driving the control unit 140. The operation unit 142 inputs various instruction signals or the like for turning the power on/off, selecting a shooting mode, performing shooting or the like. The display apparatus 102 displays a captured image or the like. The external memory 143 enlarges storage capacity.

The control unit 140 includes an operational circuit having a microcomputer (CPU); and the like, for example. The storage apparatus 141, the operation unit 142, an analog signal processing unit 144, a digital signal processing unit 145, two A/D converters 146 and 147, a D/A converter 148, and a timing generator (TG) 149 are connected to this control unit 140. The analog signal processing unit 144 is connected to a CCD 4 attached to the lens device 1, and performs predetermined signal processing by means of an analog signal corresponding to a captured image output from the CCD4. This analog signal processing unit 144 is connected to the first A/D converter 146, and an output thereof is converted to a digital signal by this A/D converter 146.

To the first A/D converter 146 is connected the digital signal processing unit 145 which performs predetermined signal processing by means of a digital signal supplied from the first A/D converter 146. To this digital signal processing unit 145 are connected the display apparatus 102 and the external memory 143, and an image corresponding to a subject is displayed on the display apparatus 102 or stored in the external memory 143, based upon a digital signal that is an output signal thereof. Also, to the second A/D converter 147 is connected a gyro sensor 151 showing a specific example of a blur-detecting unit. A vibration, shake or the like of the digital still camera 200 is detected by this gyro sensor 151, and image stabilization is performed according to the detected result.

To the D/A converter 148 is connected a driving control unit 152 which is a servo calculating unit for image stabilization. The driving control unit 152 stabilizes images by driving and controlling the image stabilizer 300 in accordance with the position of a correcting lens 15. To the driving control unit 152 are connected the image stabilizer 300, and a first position detector 94 and second position detector 95 which are position-detecting units that detect the position of the correcting lens 15 by detecting the positions of two moving frames 51A and 52A. In addition, the timing generator (TG) 149 is connected to the CCD 4.

Thus, when an image of a subject has been input to a lens system 2 of the lens device 1 and then an image has been formed on the focal plane of the CCD 4, an image signal thereof is output as an analog signal to which predetermined processing is carried out at the analog signal processing unit 144 and after that which is converted tc a digital signal by the first A/D converter 146. After predetermined processing is carried out at the digital signal processing unit 145, an output from the first A/D converter 146 is displayed on the display apparatus 102 as an image corresponding to the subject, or is stored in an external memory as memory information.

In the above-described shooting state, when a vibration, shake or the like is applied to the digital still camera 200 with the image stabilizer 300 in the operational state, the gyro sensor 151 detects the vibration, shake or the like and then outputs a detection signal thereof to the control unit 140. On receipt of this, the control unit 140 performs predetermined calculation processing, and outputs a control signal which controls the action of the image stabilizer 300 to the driving control unit 152. The driving control unit 152 outputs a predetermined driving signal to the image stabilizer 300 based upon the control signal from the control unit 140, thereby moving the first moving frame 51A in the first direction X by a predetermined amount and moving the second moving frame 52A in the second direction Y by a predetermined amount. This makes it possible to stabilize images by means of the movement of the correcting lens 15 and thus to obtain an excellent image.

FIG. 17 is a block diagram showing a second embodiment of the schematic configuration of a digital still camera provided with an image stabilizer 300 having the above-described structure and functions. This digital still camera 200A includes a lens device 1, a video recording/reproducing circuit unit 160, an internal memory 161, a video signal processing unit 162, a display apparatus 163, an external memory 164, a correcting lens control unit 165 and the like. The lens device 1 has an image stabilizer 300. The video recording/reproducing circuit unit 160 plays a central role in a control device. The internal memory 161 has a program memory, data memory, other RAM/ROM or the like for driving the video recording/reproducing circuit unit 160. The video signal processing unit 162 processes a captured image or the like into a predetermined signal. The display apparatus 163 displays a captured image or the like. The external memory 164 enlarges storage capacity. The correcting lens control unit 165 drives and controls the image stabilizer 300.

The video recording/reproducing circuit unit 160 includes: an operational circuit having a microcomputer (CPU); and the like, for example. The internal memory 161, the video signal processing unit 162, the correcting lens control unit 165, a monitor driving unit 166, an amplifier 167 and three interfaces (I/F) 171, 172 and 173 are connected to this video recording/reproducing circuit unit 160. The video signal processing unit 162 is connected to a CCD 4 attached to the lens device 1, via the amplifier 167, and a signal which has been processed into a predetermined video signal is input to the video recording/reproducing circuit unit 160.

The display apparatus 163 is connected to the video recording/reproducing circuit unit 160 via the monitor driving unit 166. Also, a connector 168 is connected to the first interface (I/F) 171, and the external memory 164 can be connected to this connector 168 in a freely detachable manner. A connecting terminal 174 provided in an apparatus body 201B is connected to the second interface (I/F) 172.

An acceleration sensor 175, which is a blur-detecting unit, is connected to the correcting lens control unit 165 via the third interface (I/F) 173. This acceleration sensor 175 detects displacement applied to the apparatus body 201B due to vibration, shake or the like, as acceleration, and a gyro sensor can be used as this acceleration sensor 175. To the correcting lens control unit 165 are connected: a lens driving unit of the image stabilizer 300, which drives and controls a correcting lens 15; and two position-detecting sensors 94 and 95 which detect the position of the correcting lens 15.

Thus, when an image of a subject has been input to a lens system 2 of the lens device 1 and then an image has been formed on the focal plane of the CCD 4, an image signal thereof is input to the video signal processing unit 162 via the amplifier 167. A signal which has been processed into a predetermined video signal at this video signal processing unit 162 is input to the video recording/reproducing circuit unit 160. Thus, a signal corresponding to the image of the subject is output from the video recording/reproducing circuit unit 160 to the monitor driving unit 166, and the internal memory 161 or the external memory 164. As a result, an image corresponding to the image of the subject is displayed on the display apparatus 163 via the monitor driving unit 166, or is recorded in the internal memory 161 or in the external memory 164 as an information signal, according to need.

In the above shooting state, when a vibration, shake or the like is applied to the apparatus body 201B with the image stabilizer 300 in the operational state, the acceleration sensor 175 detects the vibration, shake or the like and then outputs a detection signal thereof to the video recording/reproducing circuit unit 160 via the correcting lens control unit 165. On receipt of this, the video recording/reproducing circuit unit 160 performs predetermined calculation processing, and outputs a control signal, which controls the action of the image stabilizer 300, to the correcting lens control unit 165. This correcting lens control unit 165 outputs a predetermined driving signal to the image stabilizer 300 based upon the control signal from the video recording/reproducing circuit unit 160, thereby moving a first moving frame 51A in the first direction X by a predetermined amount and moving a second moving frame 52A in the second direction Y by a predetermined amount. This makes it possible to stabilize images by means of the movement of the correcting lens 15 and thus to obtain an excellent image.

As described above, a lens device according to an embodiment of the present invention includes an image stabilizer such that an optical axis of a correcting lens is displaced from the center of a lens barrel, and a direction of thrust generated from a first driver and a second driver forms an angle of approximately 45° to the line connecting the optical axis of the correcting lens and the center of the lens barrel. Therefore, the space surrounded by the first driver and the second driver can be small-sized in the lens barrel. As a result, the diameter of the lens barrel is made small, thereby a lens device and an imager apparatus being small-sized as a whole.

Further, since the correcting lens can be displaced from the center of the lens barrel to a position arbitrarily determined, the correcting lens and other lenses can be arranged considering the arrangement of actuators including a focus mechanism, zoom mechanism, shutter mechanism and the like of the lens device. Hence, components of each actuator can be arranged efficiently to obtain an apparatus small-sized.

The present invention is not limited to the embodiments described earlier and shown in the drawings, but various modifications are possible without deviating from the gist of the present invention. For example, although examples in which a digital still camera is used as an imager apparatus have been explained in the above-described embodiments, the present invention can be applied to digital video cameras, camera-equipped personal computers, mobile phone with a built-in camera and other imager apparatuses as well. Also, although examples in which a cylindrical barrel is used as a lens barrel 3 have been explained, the present invention can be applied to lens barrels whose cross-section perpendicular to an axial direction is elliptical and polygons such as quadrilaterals, for example. Further, although examples in which five group lenses are used as a lens device 1 have been explained, it should be appreciated that the present invention can be applied to four group lenses or fewer and also can be applied to six group lenses or more as well.

It should be understood by those skilled in the art that various modifications, combinations, sub-combinations and alterations may occur depending on design requirements and other factors insofar as they are within the scope of the appended claims or the equivalents thereof.

## Claims

1. A lens device comprising:
an image stabilizer including a lens holding frame which holds a correcting lens, a first driver which moves said lens holding frame in a first direction perpendicular to an optical axis direction of said correcting lens, and a second driver which moves said lens holding frame in a second direction perpendicular to said optical axis direction and said first direction; and
a lens barrel in which said image stabilizer is installed; wherein
said image stabilizer is arranged such that the optical axis of said correcting lens held by said image stabilizer is displaced from the center of said lens barrel, and a direction of thrust generated by each of said first and second drivers forms an angle of approximately 45° with a line connecting said optical axis of said correcting lens and the center of said lens barrel.

2. A lens device according to claim 1, wherein:
said first and second drivers include two coils and a magnet which applies magnetic force to said two coils, and
said two coils are arranged such that thrust-generating portions thereof face in said first and second directions by the magnetic force of said magnet, respectively.

3. A lens device according to claim 2, wherein
said two coils are obtained by preparing a combination of two flat coils which are levelly wound and which have linear portions to be said thrust-generating portions.

4. A lens device according to claim 2 or 3, wherein
said image stabilizer further includes a supporting frame which supports said lens holding frame in a movable manner, and said two coils or said magnet is fixed to said lens holding frame and the other is fixed to said supporting frame.

5. A lens device according to claim 4, wherein
said magnet is fixed to said lens holding frame or to said supporting frame through a yoke.

6. A lens device according to one of the claims 1 to 5, wherein
said image stabilizer further includes: a second moving frame which supports in a movable manner a first moving frame being said lens holding frame; a first guide direction; and a second guide which guides said second moving frame in said second direction.

7. A lens device according to one of the claims 1 to 6, wherein
said lens barrel has at least a cylindrical portion, and said image stabilizer is arranged such that the center of a hypothetical circle circumscribing the image stabilizer approximately corresponds with the center of a hole of said cylindrical portion.

8. An imager apparatus comprising:
a lens device according to one of the claims 1 to 7.
